# EUROPEAN PATENT APPLICATION

(11) **EP 4 718 153 A1**
(43) Date of publication of application: **01.04.2026**
(21) Application number: 24845757.4
(22) Date of filing: 24.05.2024
(51) Int. Cl.: G03B 17/17, G03B 17/12, G03B 30/00, H04N 23/55, H04N 23/51, H04N 23/57, G02B 7/02, G03B 17/02

(54) **CAMERA MODULE AND ELECTRONIC DEVICE COMPRISING SAME**

(30) Priority: 24.07.2023 KR 20230095891; 25.08.2023 KR 20230111637
(71) Applicant: Samsung Electronics Co., Ltd., Suwon-si, Gyeonggi-do 16677 (KR)
(72) Inventor: JO, Jiyeon, Suwon-si Gyeonggi-do 16677 (KR); SHIN, Jeongkil, Suwon-si Gyeonggi-do 16677 (KR)
(74) Representative: HGF
(86) International application number: PCT/KR2024/007058
(87) International publication number: WO 2025/023453

(57) **Abstract**

This camera module may comprise: a first lens; a second lens; a lens holder configured to support the first lens; a reflector disposed between the first lens and the second lens and configured to reflect, to the second lens, light passing through the first lens; and a blocking wall configured to block an optical path between the reflector and the lens holder.

## Description

### Technical Field

The disclosure relates to a camera module and an electronic device including the camera module.

### Background Art

A camera module, also referred to as a "folded module," may provide high-resolution and high-magnification optical zoom functions (e.g., telephoto zoom). The folded camera module may generate images by changing an optical path.

The above description is information the inventor(s) acquired during the course of conceiving the present disclosure, or already possessed at the time, and is not necessarily art publicly known before the present application was filed.

### DISCLOSURE OF THE INVENTION

### Technical Solutions

A camera module may include a first lens and a second lens. The camera module may include a lens holder configured to support the first lens. The camera module may include a reflector disposed between the first lens and the second lens and configured to reflect, to the second lens, light passing through the first lens. The camera module may include a blocking wall configured to block an optical path between the reflector and the lens holder. The camera module may suppress flare.

A camera module may include a first lens and a second lens. The camera module may include a lens holder configured to support the first lens. The camera module may include a reflector disposed between the first lens and the second lens and configured to reflect, to the second lens, light passing through the first lens. The camera module may include a concealing portion configured to conceal another component except the reflector. The camera module may conceal an internal component.

A camera module may include a first lens and a second lens. The camera module may include a lens holder configured to support the first lens. The camera module may include a reflector disposed between the first lens and the second lens and configured to reflect, to the second lens, light passing through the first lens. The camera module may include an actuator. The actuator may include a carrier configured to carry the reflector, a first electromagnetic element disposed on the carrier, and a second electromagnetic element configured to be coupled to the first electromagnetic element. The camera module may include a housing including a mounting portion on which the second electromagnetic element is disposed and a peripheral portion positioned around the mounting portion. The lens holder may overlap at least a portion of the peripheral portion on a plane substantially orthogonal to the optical axis of the first lens. The at least a portion of the peripheral portion overlapping the lens holder may extend in a direction substantially parallel to a direction along the optical axis. A thickness of the camera module may be maintained or reduced.

### BRIEF DESCRIPTION OF THE DRAWINGS

The above and other aspects, features, and advantages of certain embodiments of the disclosure will be more apparent from the following description taken in conjunction with reference to the accompanying drawings, in which:
FIG. 1 is a block diagram illustrating an electronic device in a network environment according to an embodiment of the disclosure;
FIG. 2 is a block diagram illustrating a camera module according to an embodiment of the disclosure;
FIG. 3 is a perspective view of an electronic device in one direction according to an embodiment of the disclosure;
FIG. 4 is a perspective view of the electronic device in another direction according to an embodiment of the disclosure;
FIG. 5 is a perspective view of a camera module according to an embodiment of the disclosure;
FIG. 6 is a plan view of the camera module according to an embodiment of the disclosure;
FIG. 7 is a perspective view of the camera module with a camera cover removed, according to an embodiment of the disclosure;
FIG. 8 is a plan view of the camera module with the camera cover removed, according to an embodiment of the disclosure;
FIG. 9 is an exploded perspective view of the camera module according to an embodiment of the disclosure;
FIG. 10 is a cross-sectional view of the camera module of FIG. 6, taken along a line 10-10 according to an embodiment of the disclosure;
FIG. 11 is a perspective view illustrating a portion A of the camera module of FIG. 10 according to an embodiment of the disclosure;
FIG. 12 is an enlarged view of the portion A of the camera module of FIG. 10 according to an embodiment of the disclosure;
FIG. 13 is an enlarged view of a portion B of the camera module of FIG. 12 according to an embodiment of the disclosure;
FIG. 14 is a perspective view of a reflector and a blocking wall in the camera module, according to an embodiment of the disclosure;
FIG. 15 is a perspective view illustrating a concealing portion in the camera module, according to an embodiment of the disclosure;
FIG. 16 is a cross-sectional perspective view of the camera module of FIG. 15, taken along a line 16-16 according to an embodiment of the disclosure;
FIG. 17 is a perspective view of the concealing portion according to an embodiment of the disclosure;
FIG. 18 is a plan view of the concealing portion according to an embodiment of the disclosure;
FIG. 19 is a bottom view of the concealing portion according to an embodiment of the disclosure;
FIG. 20 is a diagram illustrating a relationship of the concealing portion to an effective optical path between a first lens and a reflector in the camera module, according to an embodiment of the disclosure;
FIG. 21 is a diagram illustrating an arrangement relationship of the first lens, the reflector, and the concealing portion in the camera module, according to an embodiment of the disclosure;
FIG. 22 is a perspective view of an overlap structure between a lens holder and a housing in the camera module, according to an embodiment of the disclosure;
FIG. 23 is a plan view of the overlap structure between the lens holder and the housing in the camera module, according to an embodiment of the disclosure;
FIG. 24 is a side view of the overlap structure between the lens holder and the housing in the camera module, according to an embodiment of the disclosure;
FIG. 25 is a diagram illustrating an overlap structure between the lens holder and a camera cover in the camera module, according to an embodiment of the disclosure;
FIG. 26 is an enlarged view of a portion C of FIG. 25 according to an embodiment of the disclosure;
FIG. 27 is a diagram illustrating an arrangement relationship of a first lens, a reflector, and a concealing portion in a camera module, according to an embodiment of the disclosure;
FIG. 28 is a diagram illustrating an integrated structure of a lens holder and a camera cover in a camera module, according to an embodiment of the disclosure;
FIG. 29 is a diagram illustrating a structure of a lens holder to be assembled to a camera cover in a camera module, according to an embodiment of the disclosure;
FIG. 30 is a diagram illustrating the structure of the lens holder assembled to the camera cover in the camera module, according to an embodiment of the disclosure;
FIG. 31 is a diagram illustrating a blocking wall in a camera module, according to an embodiment of the disclosure;
FIG. 32 is an enlarged view of a portion D of FIG. 31 according to an embodiment of the disclosure;
FIG. 33 is a diagram illustrating a blocking wall in a camera module, according to an embodiment of the disclosure; and
FIG. 34 is an enlarged view of a portion E of FIG. 33 according to an embodiment of the disclosure.

### BEST MODE FOR CARRYING OUT THE INVENTION

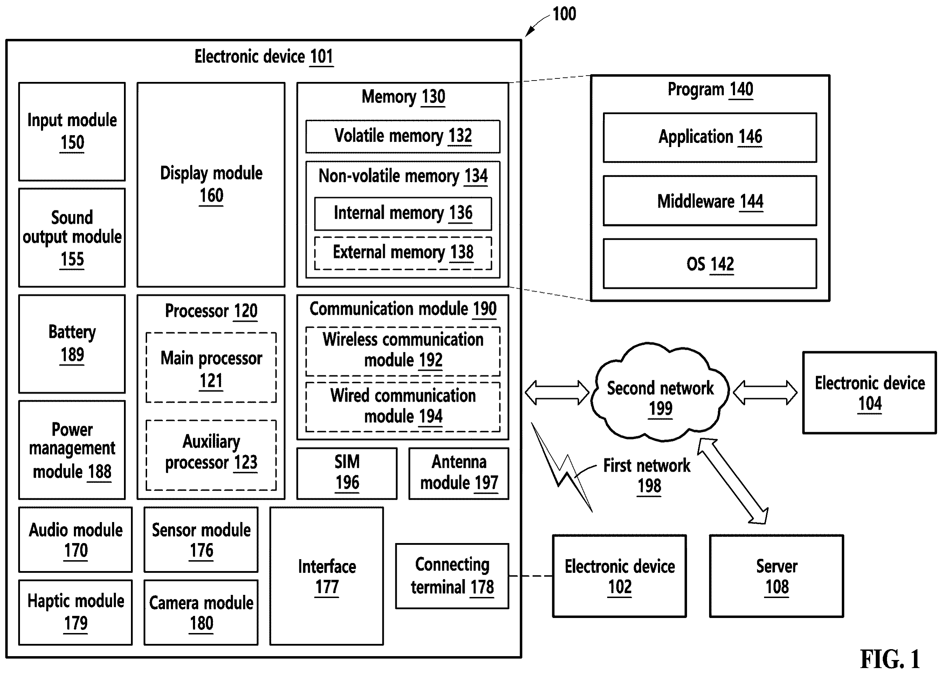

FIG. 1 is a block diagram illustrating an electronic device in a network environment according to an embodiment of the disclosure.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added to the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., the NPU) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via an external electronic device (e.g., the electronic device 102) (e.g., a speaker or headphones) directly (e.g., wiredly) or wirelessly coupled with the sound output module 155 or the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, ISPs, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell, which is not rechargeable, a secondary cell, which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., the AP) and support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., a LAN or a wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected, for example, by the communication module 190 from the plurality of antennas. The signal or power may then be transmitted or received between the communication module 190 and the external electronic device via the at least one selected antenna. According to an embodiment, another component (e.g., a radio frequency integrated circuit (RFIC)) other than the radiating element may be additionally formed as part of the antenna module 197.

According to an embodiment, the antenna module 197 may form a mmWave antenna module. According to an embodiment, the mmWave antenna module may include a PCB, an RFIC disposed on a first surface (e.g., the bottom surface) of the PCB or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, cloud computing, distributed computing, mobile edge computing (MEC), or client-server computing technology may be used, for example. The electronic device 101 may provide ultra low-latency services using, e.g., distributed computing or MEC. In an embodiment, the external electronic device 104 may include an Internet-of-Things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to the embodiments disclosed herein may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic device is not limited to those described above.

It should be appreciated that the embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B or C," "at least one of A, B and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and do not limit the components in other aspects (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., wiredly), wirelessly, or via a third element.

As used in connection with embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to embodiments disclosed herein may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

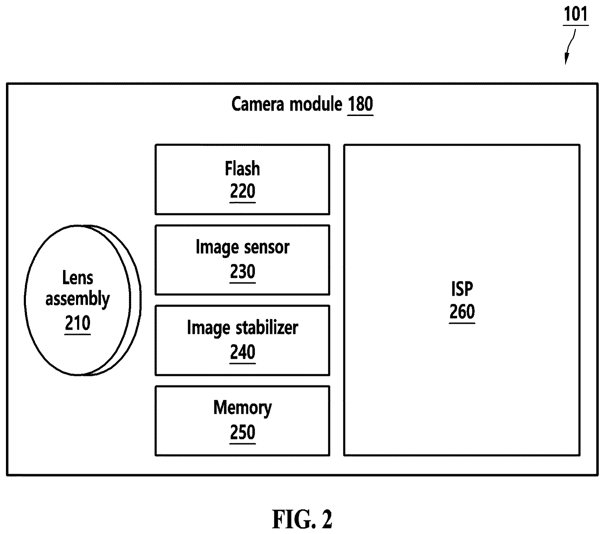

FIG. 2 is a block diagram illustrating a camera module according to an embodiment of the disclosure.

Referring to FIG. 2, the camera module 180 may include a lens assembly 210, a flash 220, an image sensor 230, an image stabilizer 240, memory 250 (e.g., buffer memory), or an ISP 260. The lens assembly 210 may collect light emitted from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light emitted or reflected from an object. According to an embodiment, the flash 220 may include one or more light emitting diodes (LEDs) (e.g., a red-green-blue (RGB) LED, a white LED, an IR LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as an RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160. Thereafter, if a specified condition is met (e.g., by a user's input or system command), at least part of the raw image stored in the memory 250 may be obtained and processed, for example, by the ISP 260. According to an embodiment, the memory 250 may be configured as at least part of the memory 130 or as a separate memory that is operated independently from the memory 130.

The ISP 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the ISP 260 may perform control (e.g., exposure time control or read-out timing control) with respect to at least one (e.g., the image sensor 230) of the components included in the camera module 180. An image processed by the ISP 260 may be stored back in the memory 250 for further processing, or may be provided to an external component (e.g., the memory 130, the display module 160, the electronic device 102, the electronic device 104, or the server 108) outside the camera module 180. According to an embodiment, the ISP 260 may be configured as at least part of the processor 120, or as a separate processor operated independently from the processor 120. If the ISP 260 is configured as a separate processor from the processor 120, at least one image processed by the ISP 260 may be displayed, by the processor 120, via the display module 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules 180 may form a telephoto camera. Similarly, at least one of the plurality of camera modules 180 may form, for example, a front camera and at least another of the plurality of camera modules 180 may form a rear camera.

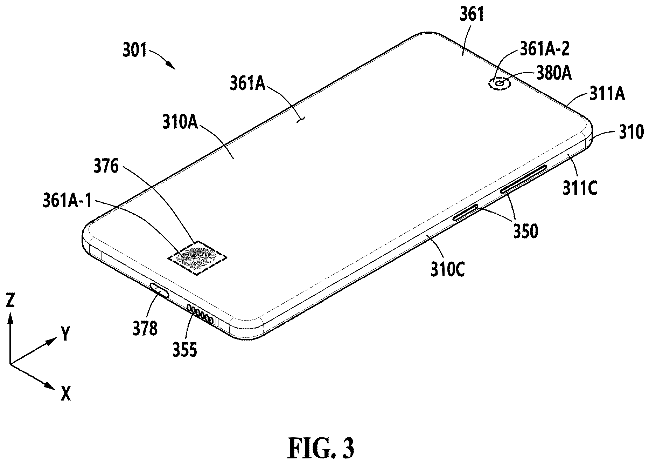

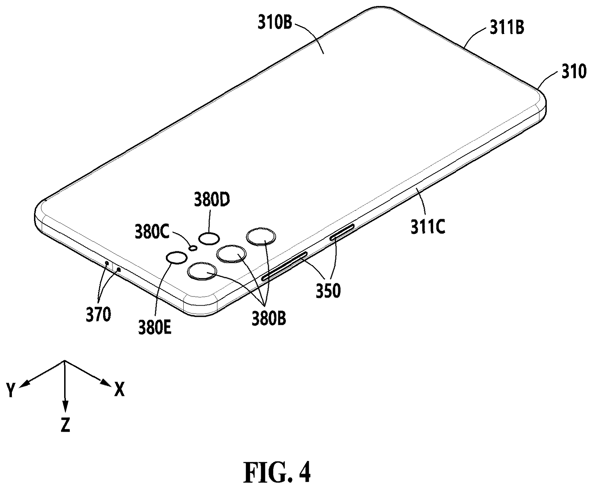

FIG. 3 is a perspective view of an electronic device in one direction according to an embodiment of the disclosure. FIG. 4 is a perspective view of the electronic device in another direction according to an embodiment of the disclosure.

Referring to FIGS. 3 and 4, an electronic device 301 (e.g., the electronic device 101 of FIG. 1) may include a housing 310 including a first surface 310A (e.g., a front surface), a second surface 310B (e.g., a rear surface), and a third surface 310C (e.g., a side surface) enclosing a space between the first surface 310A and the second surface 310B. The first surface 310A may be formed by a first plate 311A of which at least a portion is substantially transparent. For example, the first plate 311A may include a polymer plate or a glass plate including at least one coating layer. The second surface 310B may be formed by a second plate 311B that is substantially opaque. For example, the second plate 311B may be formed of coated or tinted glass, ceramic, polymer, metal (e.g., aluminum, stainless steel (STS), or magnesium), or a combination thereof. The third surface 310C may be formed by a frame 311C that is coupled to the first plate 311A and the second plate 311B and includes a metal and/or a polymer. The second plate 311B and the frame 311C may be formed monolithically. The second plate 311B and the frame 311C may be formed of substantially the same material (e.g., aluminum).

The electronic device 301 may include an input module 350 (e.g., the input module 150 of FIG. 1). The input module 350 may be disposed on the third surface 310C. The input module 350 may include at least one key input device. For example, the key input device may include one or more mechanical actuators (e.g., buttons), one or more capacitors, and/or one or more inductors.

The electronic device 301 may include a sound output module 355 (e.g., the sound output module 155 of FIG. 1). The sound output module 355 may be disposed on the third surface 310C. The sound output module 355 may include one or more holes.

The electronic device 301 may include a display module 361 (e.g., the display module 160 of FIG. 1). The display module 361 may be disposed on the first surface 310A. The display module 361 may be visible through at least a portion of the first plate 311A. The display module 361 may have a shape that is substantially the same as the shape of an outer edge of the first plate 311A. The periphery of the display module 361 may substantially coincide with the outer edge of the first plate 311A. The display module 361 may include a touch sensing circuit, a pressure sensor for measuring an intensity (pressure) of a touch, and/or a digitizer for detecting a magnetic-type stylus pen. The display module 361 may include a screen display area 361A that is visually exposed to display content using pixels. The screen display area 361A may include a sensing area 361A-1. The sensing area 361A-1 may overlap at least one area of the screen display area 361A. The sensing area 361A-1 may allow transmission of an input signal related to a sensor module 376 (e.g., the sensor module 176 of FIG. 1). The sensing area 361A-1 may display content, like the screen display area 361A that does not overlap the sensing area 361A-1. For example, the sensing area 361A-1 may display the content while the sensor module 376 is not operating. At least a portion of a camera area 361A-2 may overlap the screen display area 361A. The screen display area 361A may include the camera area 361A-2. The camera area 361A-2 may allow transmission of an optical signal related to a first camera module 380A (e.g., the camera module 180 of FIG. 1 and/or the camera module 180 of FIG. 2). At least a portion of the camera area 361A-2, that overlaps the screen display area 361A, may display content, similarly to the screen display area 361A that does not overlap the camera area 361A-2. For example, the camera area 361A-2 may display the content while the first camera module 380A is not operating.

The electronic device 301 may include an audio module 370 (e.g., the audio module 170 of FIG. 1). The audio module 370 may be disposed on the third surface 310C. The audio module 370 may obtain a sound through at least one hole.

The electronic device 301 may include the sensor module 376. The sensor module 376 may be disposed on the first surface 310A. The sensor module 376 may form the sensing area 361A-1 in at least a portion of the screen display area 361A. The sensor module 376 may receive an input signal transmitted through the sensing area 361A-1 and generate an electrical signal based on the received input signal. For example, the input signal may have a designated physical quantity (e.g., heat, light, temperature, sound, pressure, or ultrasound). The input signal may include a signal related to biometric information (e.g., a fingerprint) of a user.

The electronic device 301 may include a connecting terminal 378 (e.g., the connecting terminal 178 of FIG. 1). The connecting terminal 378 may be disposed on the third surface 310C. For example, when the electronic device 301 is viewed in one direction (e.g., a +Y direction), the connecting terminal 378 may be positioned substantially in a central portion of the third surface 310C, and the sound output module 355 may be positioned on one side (e.g., a right side) with respect to the connecting terminal 378.

The electronic device 301 may include the first camera module 380A (e.g., the camera module 180 of FIG. 1 and/or the camera module 180 of FIG. 2). The first camera module 380A may be disposed on the first surface 310A. At least a portion of the first camera module 380A may be disposed under the display module 361. The first camera module 380A may receive an optical signal transmitted through the camera area 361A-2.

The electronic device 301 may include a plurality of second camera modules 380B (e.g., the camera module 180 of FIG. 1 and/or the camera module 180 of FIG. 2). The plurality of second camera modules 380B may be positioned on the second surface 310B. The plurality of second camera modules 380B may be arranged in a first row in one direction (e.g., a Y direction) of the second plate 311B. The plurality of second camera modules 380B may have different fields of view. For example, the plurality of second camera modules 380B may include an ultra wide-angle camera, a wide-angle camera, and/or a telephoto camera.

The electronic device 301 may include a light module 380C (e.g., the flash 220 of FIG. 2). The light module 380C may be arranged in a second row substantially parallel to the first row of the plurality of second camera modules 380B on the second surface 310B. The light module 380C may include one or more light-emitting diodes or xenon lamps. The light module 380C may include a sensor configured to detect external light. For example, the sensor may include a flicker sensor.

The electronic device 301 may include a third camera module 380D. The pixel, magnification, and/or field of view of the third camera module 380D may differ from the pixel, magnification, and/or field of view of at least one second camera module 380B. The third camera module 380D may be arranged in the second row substantially parallel to the first row of the plurality of second camera modules 380B on the second surface 310B.

The electronic device 301 may include a fourth camera module 380E. The fourth camera module 380E, which may also be referred to as a "depth camera" or a "time-of-flight (ToF) camera", may be configured to measure the distance between the fourth camera module 380E and an object. For example, the fourth camera module 380E may be configured to measure the distance using at least one or a combination of an ultrasonic wave, an infrared ray, or a laser. The fourth camera module 380E may be arranged in the second row substantially parallel to the first row of the plurality of second camera modules 380B on the second surface 310B.

Meanwhile, the embodiments set forth herein may also apply to electronic devices of various shapes/forms (e.g., a foldable electronic device, a slidable electronic device, a rollable electronic device, a digital camera, a digital video camera, a tablet, a laptop computer, and other electronic devices), in addition to the electronic device shown in FIGS. 3 and 4.

As used herein, the terms "substantially", "approximately", "generally", and "about" in reference to a given parameter, attribute, or condition may include a degree that one of ordinary skill in the art would understand that the given parameter, attribute, or condition is met with a small degree of variance, such as within acceptable manufacturing tolerances. For example, a parameter that is substantially met may be at least about 90% met, at least about 95% met, or at least about 99% met.

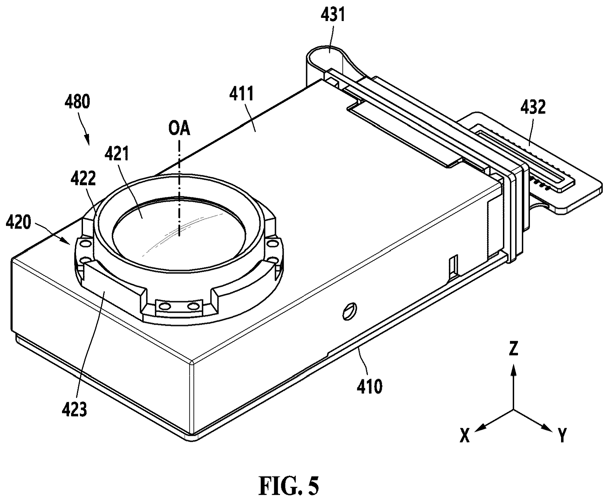

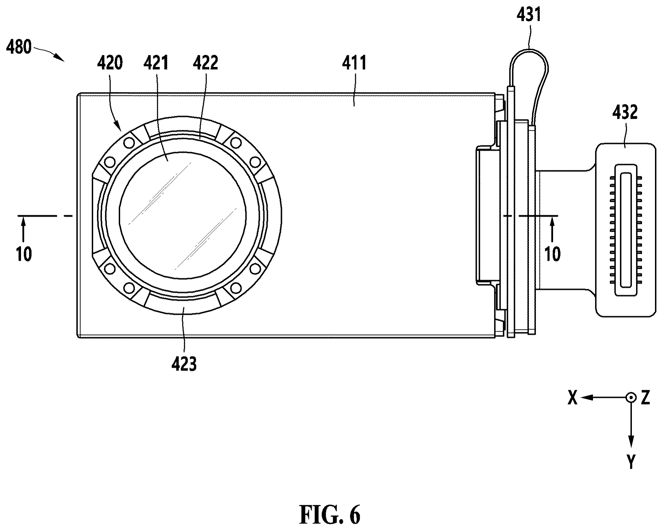

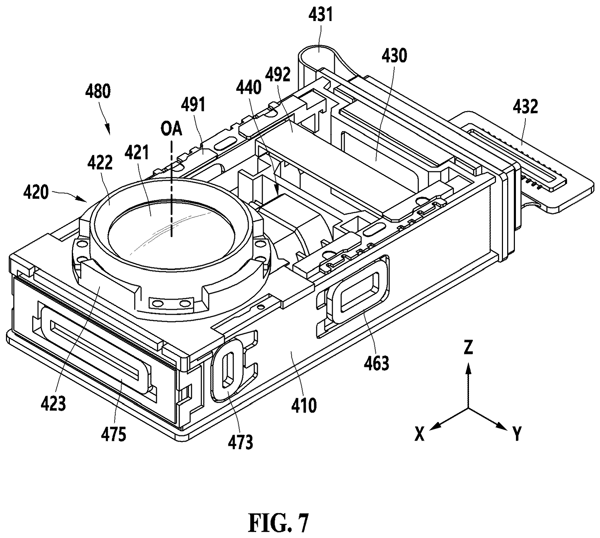

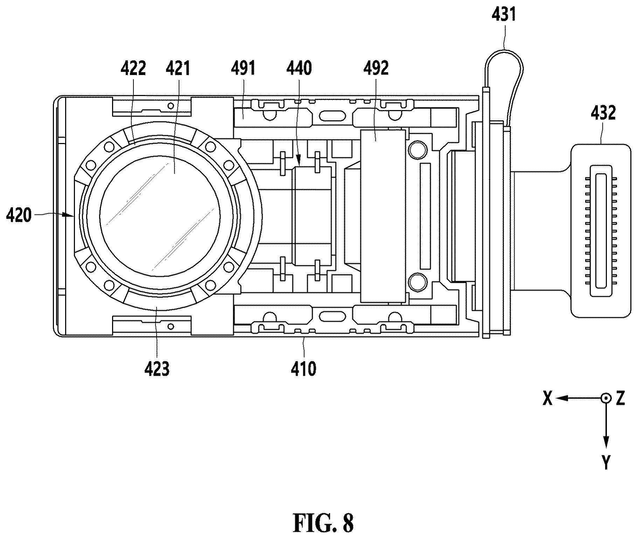

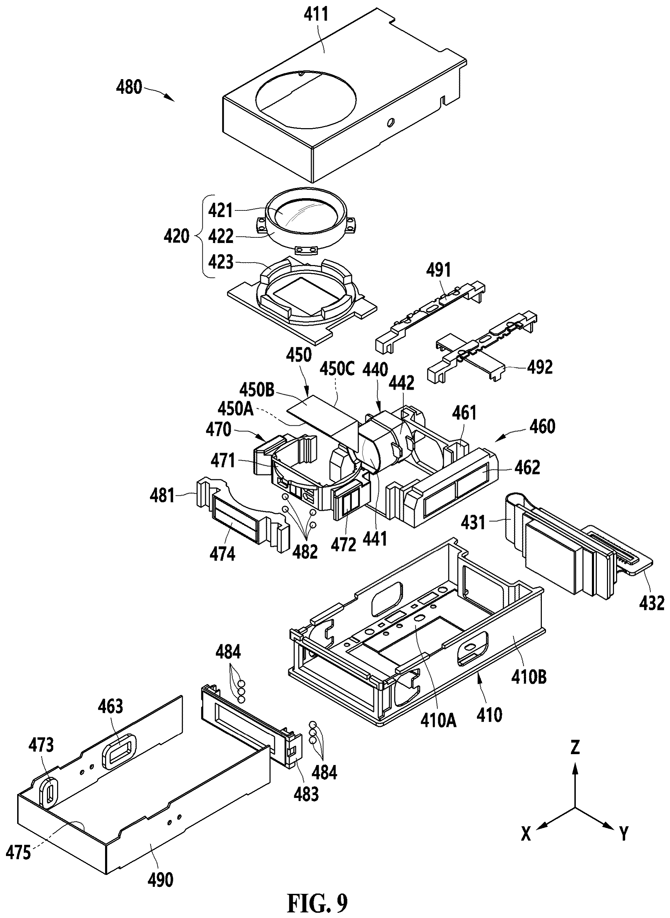

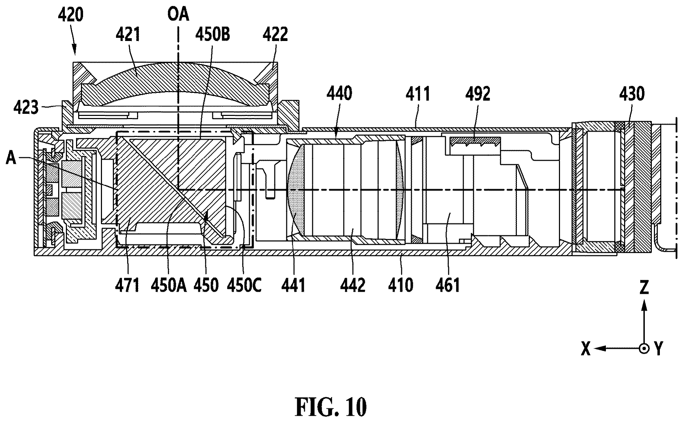

FIG. 5 is a perspective view of a camera module according to an embodiment of the disclosure. FIG. 6 is a plan view of the camera module according to an embodiment of the disclosure. FIG. 7 is a perspective view of the camera module with a camera cover removed, according to an embodiment of the disclosure. FIG. 8 is a plan view of the camera module with the camera cover removed, according to an embodiment of the disclosure. FIG. 9 is an exploded perspective view of the camera module according to an embodiment of the disclosure. FIG. 10 is a cross-sectional view of the camera module of FIG. 6, taken along a line 10-10 according to an embodiment of the disclosure.

Referring to FIGS. 5 to 10, a camera module 480 (e.g., the camera module 180 of FIGS. 1 and 2, and/or the second camera module 380B and/or the third camera module 380D of FIGS. 3 and 4) may include a camera housing 410. The camera housing 410 may be configured to accommodate one or more camera-related components. The camera housing 410 may include a base frame 410A and a plurality of side frames 410B connected to the base frame 410A. The camera module 480 may include a camera cover 411. The camera cover 411, which may also be referred to as a "shield can," may be configured to cover one or more camera-related components accommodated in the camera housing 410.

The camera module 480 may include an image sensor 430 (e.g., the image sensor 230 of FIG. 2) configured to convert an optical signal into an electrical signal. The camera module 480 may include a PCB 431 configured to transmit an electrical signal from the image sensor 430. The PCB 431 may be electrically connected to the image sensor 430. The PCB 431 may include a flexible PCB (FPCB). The camera module 480 may include a connector 432 configured to transmit an electrical signal to a processor (not shown) (e.g., the processor 120 of FIG. 1). The connector 432 may be electrically connected to a PCB (not shown) in an electronic device (not shown) (e.g., the electronic device 101 of FIGS. 1 and 2 and/or the electronic device 301 of FIGS. 3 and 4).

The camera module 480 may include a first lens assembly 420 (e.g., the lens assembly 210 of FIG. 2). The first lens assembly 420 may include at least one first lens 421 having a defined optical axis OA. A portion of the optical axis OA may be defined as a line connecting the center of curvature of a first surface of at least one first lens 421 and the center of curvature of an Nth surface (N is a natural number). The first lens assembly 420 may include a first lens housing 422 configured to accommodate at least one first lens 421. The first lens assembly 420 may include a lens holder 423 configured to hold the first lens housing 422. The lens holder 423 may be configured to support at least one first lens 421. The lens holder 423 may be configured to be coupled to the camera housing 410. In an embodiment, the lens holder 423 may be detachably coupled to the first lens housing 422. In an embodiment not shown, the lens holder 423 may be formed integrally with the first lens housing 422.

The camera module 480 may include a second lens assembly 440 (e.g., the lens assembly 210 of FIG. 2). The second lens assembly 440 may include at least one second lens 441 having a defined optical axis OA. A portion of the optical axis OA may be defined as a line connecting the center of curvature of a first surface of at least one second lens 441 and the center of curvature of an Nth surface (N is a natural number). The second lens assembly 440 may include a second lens housing 442 configured to accommodate at least one second lens 441.

The camera module 480 may include a reflector 450 configured to reflect light. The reflector 450 may include a reflective surface 450A configured to reflect, to at least one second lens 441, light passing through at least one first lens 421. The reflector 450 may include an incident surface 450B onto which light is incident. The reflector 450 may include an exit surface 450C through which light exits. The light passing through at least one first lens 421 may be incident through the incident surface 450B, reflected on the reflective surface 450A, and then pass through at least one second lens 441 through the exit surface 450C. The reflective surface 450A, the incident surface 450B, and the exit surface 450C may substantially define an effective optical path of the reflector 450. In an embodiment not shown, the reflector 450 may include a mirror having the reflective surface 450A.

The camera module 480 may include an auto-focus (AF) actuator 460. The AF actuator 460 may implement an AF operation (e.g., movement in an X-axis direction) of the second lens assembly 440. The AF actuator 460 may include an AF carrier 461 configured to carry the second lens housing 442. The AF carrier 461 may be sized and shaped to accommodate the second lens housing 442. The AF carrier 461 may be disposed on a base frame 410A. The AF actuator 460 may include at least one AF magnet 462, which may also be referred to as an "electromagnetic element." At least one AF magnet 462 may be disposed in an area (e.g., a +/-Y direction side area or a recess thereof) of the AF carrier 461. The AF actuator 460 may include at least one AF coil 463, which may also be referred to as an "electromagnetic element." At least one AF coil 463 may be configured to be electromagnetically coupled to at least one AF magnet 462. At least one AF coil 463 may be disposed in an area (e.g., a +/-Y directional area) of the side frame 410B.

The camera module 480 may include an optical image stabilization (OIS) actuator 470. The OIS actuator 470 may implement an OIS operation of the reflector 450. For example, the OIS actuator 470 may rotate or tilt the reflector 450 about a pitch axis (e.g., a Y axis) and/or a yaw axis (e.g., a Z axis). The OIS actuator 470 may include an OIS carrier 471 configured to carry the reflector 450. The OIS carrier 471 may be sized and shaped to accommodate the reflector 450. The OIS carrier 471 may be disposed on the base frame 410A. The OIS actuator 470 may include at least one first OIS magnet 472, which may also be referred to as an "electromagnetic element." At least one first OIS magnet 472 may be disposed in a first area (e.g., a substantially +/-Y-direction side area or a recess thereof) of the OIS carrier 471. The OIS actuator 470 may include at least one first OIS coil 473, which may also be referred to as an "electromagnetic element." At least one first OIS coil 473 may be configured to be electromagnetically coupled to at least one first OIS magnet 472. At least one first OIS coil 473 may be spaced apart in one direction (e.g., in the X-axis direction) from at least one AF coil 463 so as not to overlap at least one AF magnet 462 and may be disposed in an area (e.g., the +/-Y directional area) of the side frame 410B. The electromagnetic coupling between the first OIS magnet 472 and the first OIS coil 473 may implement rotation of the OIS carrier 471 about the pitch axis (e.g., the Y axis). The OIS actuator 470 may include at least one second OIS magnet 474, which may also be referred to as an "electromagnetic element." The OIS actuator 470 may include at least one second OIS coil 475, which may also be referred to as an "electromagnetic element." At least one second OIS coil 475 may be configured to be electromagnetically coupled to at least one second OIS magnet 474. At least one second OIS coil 475 may be disposed in an area (e.g., the +X directional area) of the side frame 410B.

The camera module 480 may include a first guide 481 and at least one first ball 482. The first guide 481 may include at least one first inner groove configured to at least partially accommodate at least one first ball 482. For example, the first inner groove may extend along an inner surface of the first guide 481 in a rotational direction about the Z-axis. The OIS carrier 471 may include at least one outer groove configured to at least partially accommodate at least one first ball 482. At least one outer groove of the OIS carrier 471 may extend along an outer surface of the OIS carrier 471 in the rotational direction about the Z-axis. The OIS carrier 471 may be configured to be in cloud contact with at least one first ball 482 and to rotate about the Z-axis by the first guide 481. The camera module 480 may include a second guide 483 and at least one second ball 484. The first guide 481 may include at least one first outer groove configured to accommodate at least one second ball 484, and the second guide 483 may include at least one second inner groove configured to accommodate at least one second ball 484. For example, at least one first outer groove may extend along an outer surface of the first guide 481 in a rotational direction about the Y-axis, and at least one second inner groove may extend along an inner surface of the second guide 483 in the rotational direction about the Y-axis. The first guide 481 may be disposed between the OIS carrier 471 and the second guide 483, and the second guide 483 may be disposed in an area (e.g., the +X directional area) of the side frame 410B. The first guide 481 may be configured to be in cloud contact with at least one second ball 484 and to rotate about the Y-axis. The second guide 483 may be fixed to the side frame 410B.

The camera module 480 may include a PCB 490. The PCB 490 may provide electrical connections to at least one AF coil 463, at least one first OIS coil 473, and at least one second OIS coil 475. These coils may be disposed on the PCB 490. The PCB 490 may include an FPCB. The PCB 490 may surround the side frames 410B.

The camera module 480 may include a stopper 491. The stopper 491 may reduce or prevent the second lens assembly 440 from moving beyond a predetermined movement range in a Z-axis direction due to an external impact. The stopper 491 may be disposed between the camera cover 411 and the second lens housing 442. The camera module 480 may include a baffle 492. The baffle 492 may assist in the alignment of the AF carrier 461.

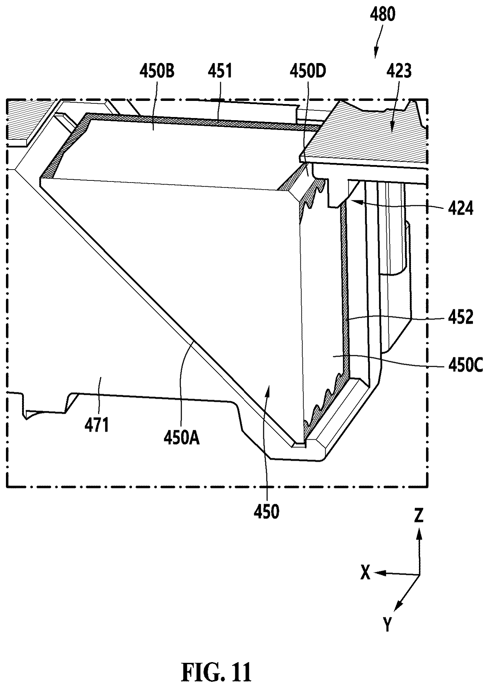

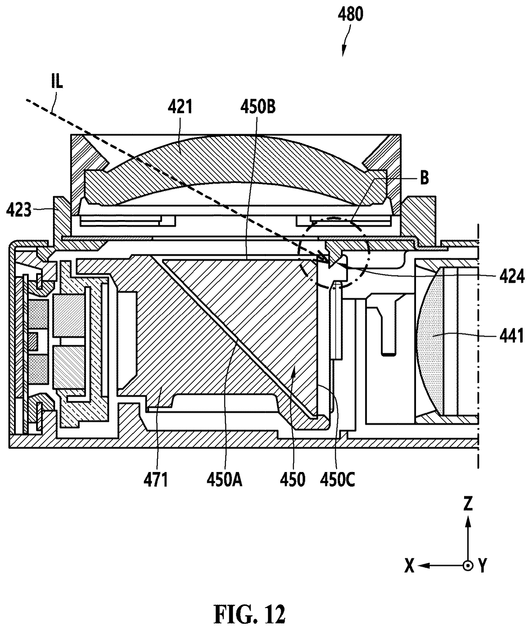

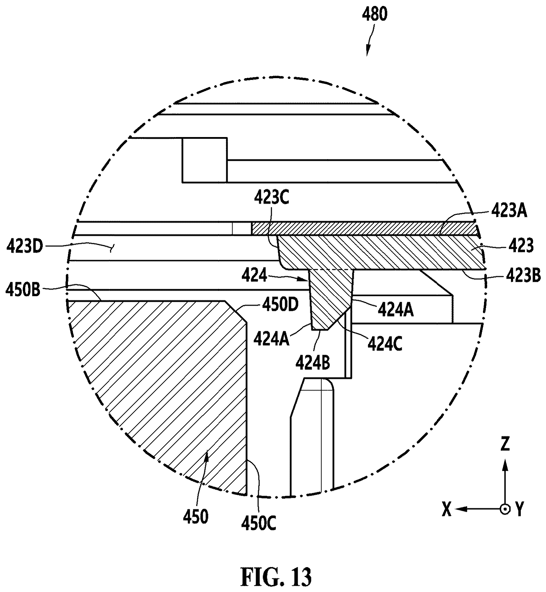

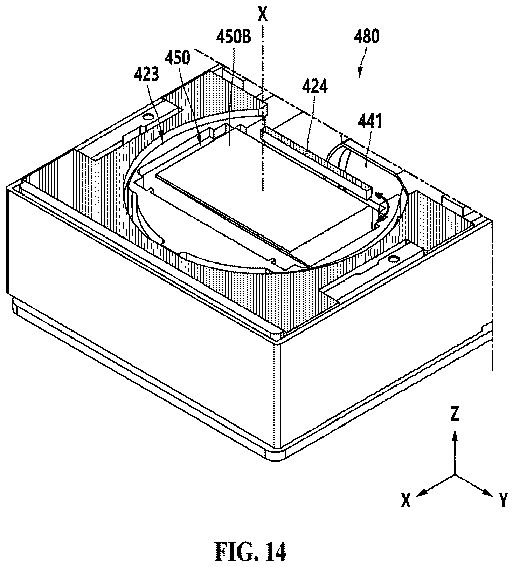

FIG. 11 is a perspective view illustrating a portion A of the camera module of FIG. 10 according to an embodiment of the disclosure. FIG. 12 is an enlarged view of the portion A of the camera module of FIG. 10 according to an embodiment of the disclosure. FIG. 13 is an enlarged view of a portion B of the camera module of FIG. 12 according to an embodiment of the disclosure. FIG. 14 is a perspective view of a reflector and a blocking wall in the camera module, according to an embodiment of the disclosure.

Referring to FIGS. 11 to 14, the camera module 480 may include a blocking wall 424. The blocking wall 424 may be configured to block light outside an effective optical path through which light passes through the first lens 421, is reflected by the reflective surface 450A of the reflector 450, and passes through the second lens 441. For example, as illustrated in FIG. 12, the blocking wall 424 may be configured to block light IL that passes obliquely through the first lens 421 and is incident to a space between the lens holder 423 and the reflector 450. The light outside the effective optical path may pass through the second lens 441 and may not be received by an image sensor (e.g., the image sensor 430 of FIGS. 5 to 10). Therefore, a flare phenomenon on an image may be suppressed and the quality of the image may be improved. In some embodiments, the incident light IL may be light incident obliquely along a chamfered surface 450D between the incident surface 450B and the exit surface 450C of the reflector 450.

The blocking wall 424 may include a plurality (e.g., a pair) of first wall surfaces 424A intersecting (e.g., substantially orthogonal to) a second holder surface 423B. The plurality of first wall surfaces 424A may be spaced apart from one another to define a thickness of the blocking wall 424. One first wall surface 424A of the plurality of first wall surfaces 424A may be oriented in a direction (e.g., a +X direction) facing the reflector 450, and the other first wall surface 424A may be oriented in a direction (e.g., a -X direction) away from the reflector 450. Among the plurality of first wall surfaces 424A, the first wall surface 424A oriented in the direction facing the reflector 450 may primarily block the incident light IL. The plurality of first wall surfaces 424A may be substantially parallel to one another. Among the plurality of first wall surfaces 424A, an extending length (e.g., a -Z directional length) of the first wall surface 424A oriented in the direction (e.g., the +X direction) facing the reflector 450 may be substantially equal to or greater than an extending length (e.g., the -Z directional length) of the first wall surface 424A oriented in the direction (e.g., the -X direction) away from the reflector 450.

The blocking wall 424 may include a second wall surface 424B connected directly to at least one first wall surface 424A of the plurality of first wall surfaces 424A or indirectly via another wall surface (e.g., a third wall surface 424C). In some embodiments, the second wall surface 424B may be directly connected to the first wall surface 424A oriented in the direction facing the reflector 450 among the plurality of first wall surfaces 424A. The second wall surface 424B may intersect (e.g., be substantially orthogonal to) at least one first wall surface 424A. An extending length (e.g., an X-axis directional length) of the second wall surface 424B may be set to any length suitable for reducing light reflected through the second wall surface 424B. The second wall surface 424B having a reduced length may be advantageous in suppressing flare.

The blocking wall 424 may include the third wall surface 424C that is inclined at a non-zero angle with respect to at least one first wall surface 424A and/or the second wall surface 424B. The third wall surface 424C may be directly connected to the second wall surface 424B. The third wall surface 424C may be directly connected to the first wall surface 424A oriented in the direction (e.g., the -X direction) away from the reflector 450 and may not be directly connected to the first wall surface 424A oriented in the direction (e.g., the +X direction) facing the reflector 450 among the plurality of first wall surfaces 424A. The third wall surface 424C oriented in this manner may reduce the possibility of light being reflected back to the exit surface 450C of the reflector 450.

In an embodiment not shown, the blocking wall 424 may include an optical mask disposed on at least one of the plurality of first wall surfaces 424A, the second wall surface 424B, or the third wall surface 424C. In an embodiment not shown, the blocking wall 424 may include an uneven surface and/or a ridged surface formed on at least one of the plurality of first wall surfaces 424A, the second wall surface 424B, or the third wall surface 424C.

The blocking wall 424 may be disposed on a second holder surface 423B opposite to a first holder surface 423A of the lens holder 423 facing the first lens 421. The lens holder 423 may include an edge area 423C defining an opening 423D of the lens holder 423 that is substantially aligned with the incident surface 450B of the reflector 450, and the blocking wall 424 may be positioned at the edge area 423C or adjacent to the edge area 423C.

The blocking wall 424 may be spaced apart from the reflector 450. For example, a spacing between the blocking wall 424 and the reflector 450 may be defined as a distance between the first wall surface 424A and the exit surface 450C viewed in one direction (e.g., the X-axis direction) of the camera module 480. The spacing may be set to any distance suitable for preventing collision between the reflector 450 and the blocking wall 424 due to shift of the reflector 450 when an external impact is applied to the camera module 480. For example, the spacing may be substantially equal to or greater than a spacing between the exit surface 450C of the reflector 450 and a surface (e.g., a +X direction surface) of the stopper 491 facing the exit surface 450C.

A width (e.g., a Y-axis directional dimension) of the blocking wall 424 may be substantially equal to or less than a width (e.g., the Y-axis directional dimension) of the reflector 450. The blocking wall 424 with reduced width may reduce the possibility of interference with the reflector 450 while the reflector 450 rotates about a yaw axis X (e.g., a Z axis) by the OIS carrier 471.

In an embodiment not shown, the width (e.g., the Y-axis directional dimension) of the blocking wall 424 may be substantially equal to or greater than the width (e.g., the Y-axis directional dimension) of the reflector 450. The width of the blocking wall 424 may be determined depending on a shape of the OIS carrier 471, a rotational range of the OIS carrier 471, and/or the distance between the blocking wall 424 and the reflector 450.

The reflector 450 may include a first optical mask 451 disposed in an edge area of the incident surface 450B and a second optical mask 452 disposed in an edge area of the exit surface 450C. The first optical mask 451 and the second optical mask 452 may substantially block an optical path that may be formed in edge areas of the reflector 450.

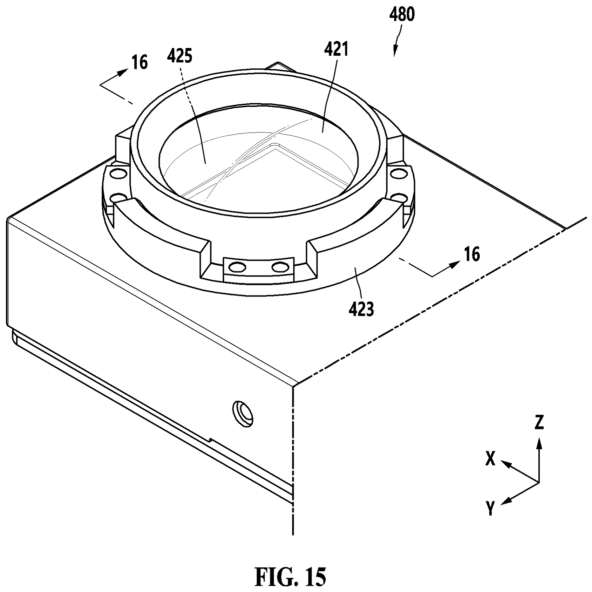

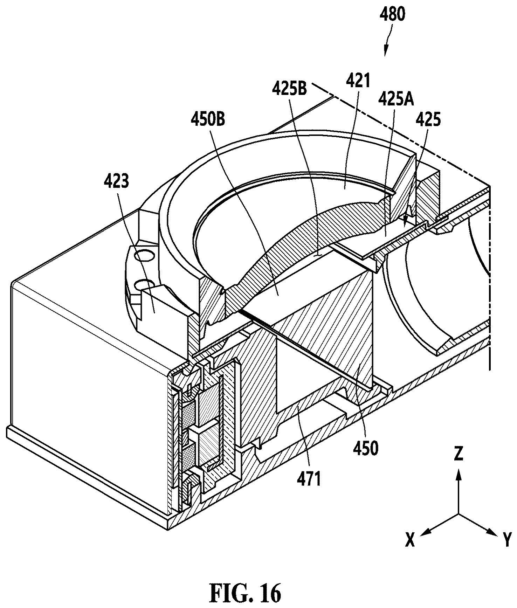

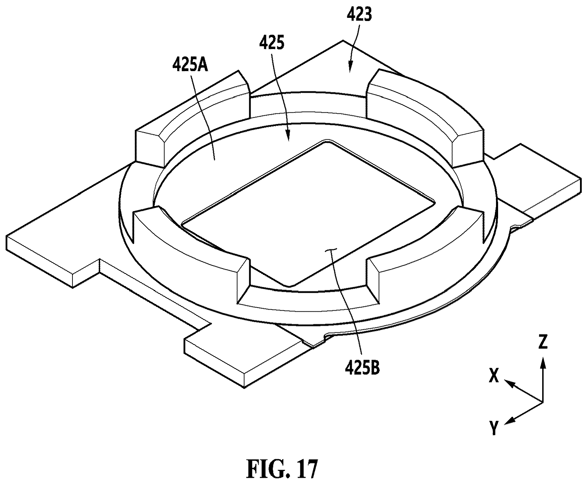

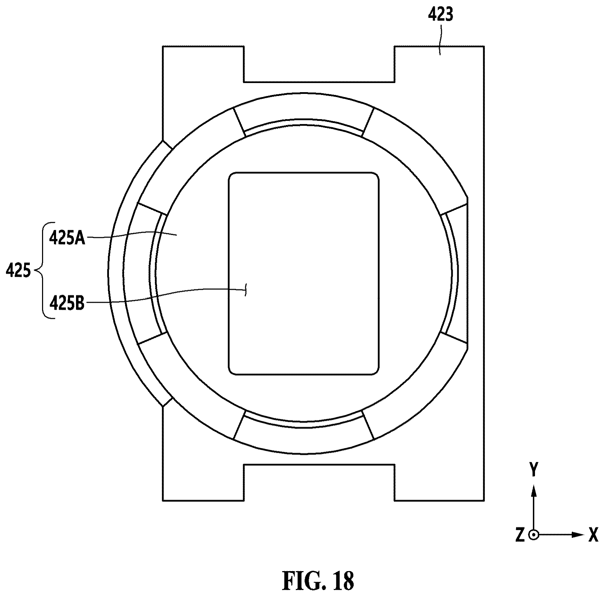

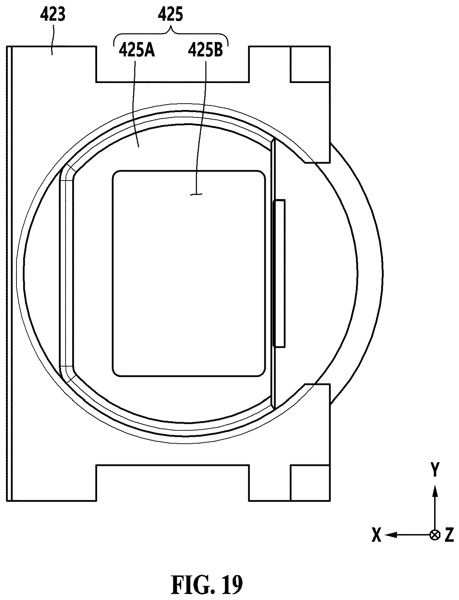

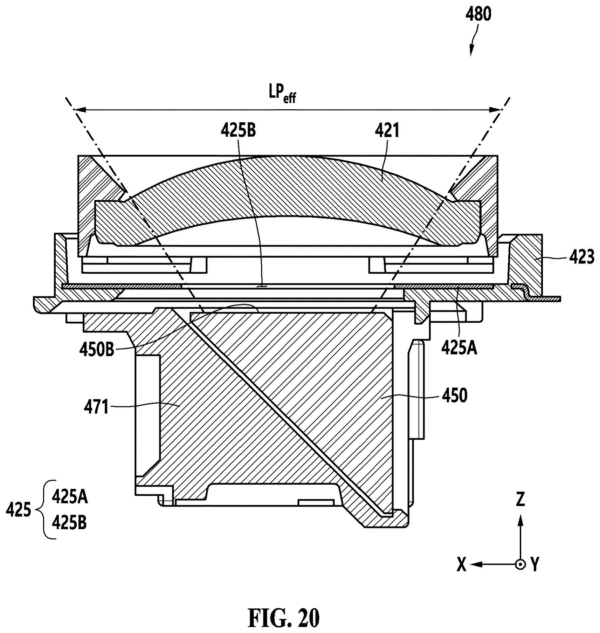

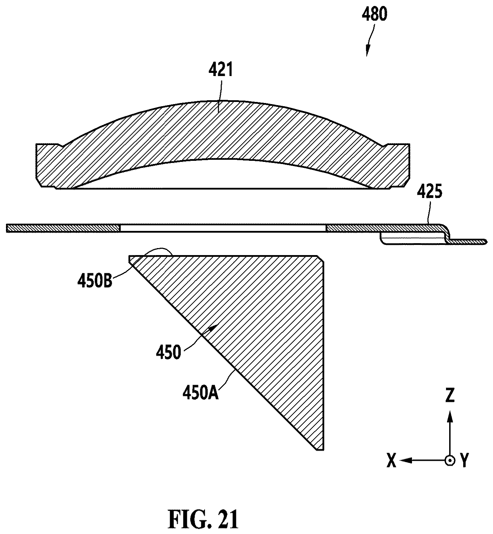

FIG. 15 is a perspective view illustrating a concealing portion in the camera module, according to an embodiment of the disclosure. FIG. 16 is a cross-sectional perspective view of the camera module of FIG. 15, taken along a line 16-16 according to an embodiment of the disclosure. FIG. 17 is a perspective view of the concealing portion according to an embodiment of the disclosure. FIG. 18 is a plan view of the concealing portion according to an embodiment of the disclosure. FIG. 19 is a bottom view of the concealing portion according to an embodiment of the disclosure. FIG. 20 is a diagram illustrating a relationship of the concealing portion to an effective optical path between a first lens and a reflector in the camera module, according to an embodiment of the disclosure. FIG. 21 is a diagram illustrating an arrangement relationship of the first lens, the reflector, and the concealing portion in the camera module, according to an embodiment of the disclosure.

Referring to FIGS. 15 to 21, the camera module 480 may include a concealing portion 425. The concealing portion 425 may be configured to conceal one or more camera-related components (e.g., the OIS carrier 471) that may be visible to the outside through the first lens 421.

The concealing portion 425 may include a base 425A and an opening 425B penetrating between a first side (e.g., a side facing the first lens 421) of the base 425A and a second side (e.g., a side facing the reflector 450) opposite to the first side. The base 425A may substantially include a sheet shape or a plate shape. The opening 425B may include a rectangular shape as illustrated but is not limited thereto and may include various shapes. For example, the opening 425B may include a shape corresponding to a polygon, circle, ellipse, or the shape of the incident surface 450B of the reflector 450.

The concealing portion 425 may be disposed in the lens holder 423. For example, the base 425A may be substantially on the same plane as the lens holder 423.

The concealing portion 425 may be positioned between a rear surface of the first lens 421 and the incident surface 450B of the reflector 450. To reduce the number of internal camera components that may be visible to the outside through the first lens 421, the concealing portion 425 may be positioned closer to the reflective surface 450A and/or the incident surface 450B of the reflector 450 than the first lens 421.

The base 425A may include a non-metallic material. For example, the base 425A may include a polymer. The base 425A may include a metallic material. A material of the base 425A may be the same as a material of the lens holder 423. The material of the base 425A may be different from the material of the lens holder 423. For example, the lens holder 423 may include a non-metallic material, and the base 425A may include a metallic material.

The base 425A may be formed integrally with the lens holder 423. In an embodiment, the lens holder 423 and the base 425A may be formed by an insert injection scheme. For example, the lens holder 423 may be formed by molding, and the base 425A may be formed by pressing. In an embodiment, the lens holder 423 and the base 425A may be formed as a single molded piece.

The base 425A may have a surface with relatively low reflectivity. For example, the base 425A may have a surface reflectivity of about 2% or less, about 1.5% or less, about 1% or less, about 0.5% or less, about 0.3% or less, or about 0.2% or less.

The base 425A may have a treated surface. In an embodiment, the base 425A may include an uneven surface and/or a ridged surface to which corrosion is applied. In an embodiment, the base 425A may include an uneven surface and/or a ridged surface to which a coating is applied.

The opening 425B may be sized such that an optical path between the first lens 421 and the reflector 450 is not blocked. The concealing portion 425 may not act as a stop.

The opening 425B may have a first directional dimension (e.g., the Y-axis directional dimension) and a second directional dimension (e.g., the X-axis directional dimension). The first directional dimension may be substantially equal to or greater than the second directional dimension. The incident surface 450B of the reflector 450 may have a third directional dimension (e.g., the Y-axis directional dimension) and a fourth directional dimension (e.g., the X-axis directional dimension). The third directional dimension may be substantially equal to or greater than the fourth directional dimension.

The first directional dimension of the opening 425B may be about 70% to about 130% of the third directional dimension of the incident surface 450B. The second directional dimension of the opening 425B may be about 70% to about 130% of the fourth directional dimension of the incident surface 450B. When the first lens 421 and the reflector 450 are sufficiently spaced apart from each other and the base 425A of the concealing portion 425 is positioned closer to the first lens 421 than to the reflector 450, the size of the opening 425B is greater than the size of an effective optical path LP_{eff}. Therefore, the number of internal camera components that may be visible through the first lens 421 excluding the reflector 450 may increase. Thus, adjusting the first and second directional dimensions of the opening 425B may reduce the number of internal camera components that may be visible through the first lens 421. An optical mask (e.g., the first optical mask 451 of FIG. 11) is disposed at an edge of the incident surface 450B, so the size of the effective optical path LP_{eff} of the incident surface 450B may be less than the size of the incident surface 450B. Thus, the size of the opening 425B may be set to be less than the size of the incident surface 450B. In addition, the distance between the base 425A and the incident surface 450B and the size of the opening 425B accordingly may be determined by considering a free space for the reflector 450 to rotate about the yaw axis (e.g., the Z-axis) and/or the pitch axis (e.g., the Y-axis) by the OIS carrier 471.

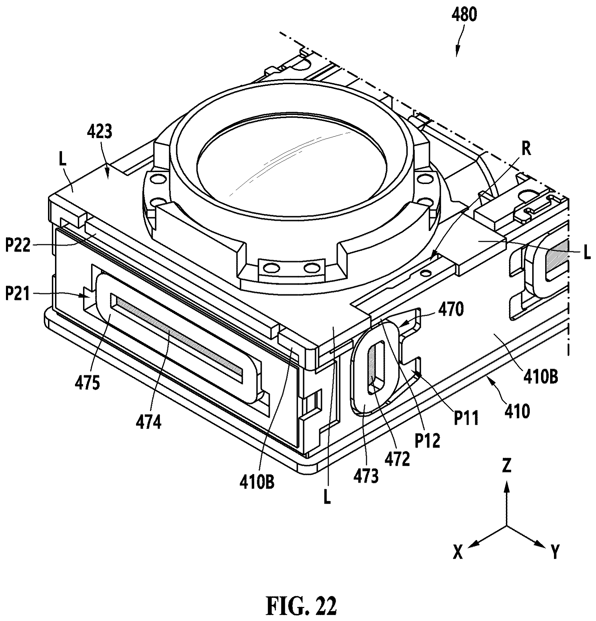

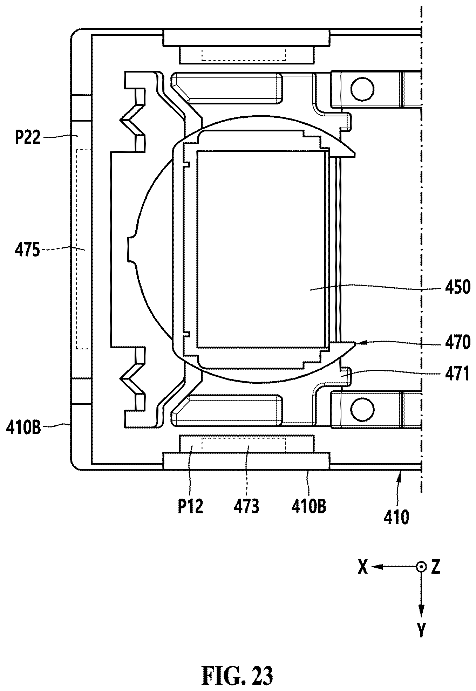

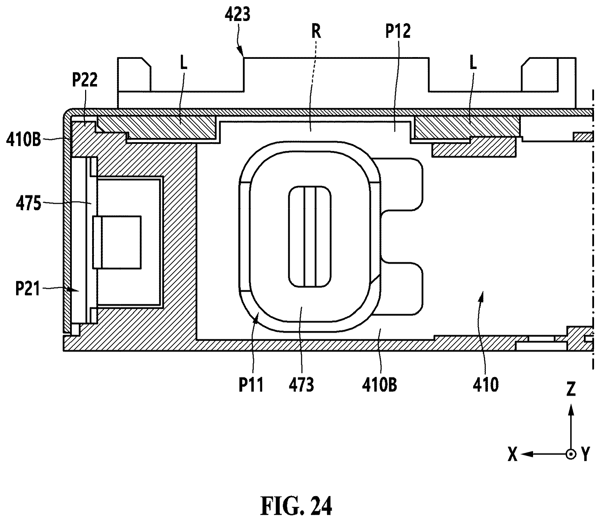

FIG. 22 is a perspective view of an overlap structure between a lens holder and a housing in the camera module, according to an embodiment of the disclosure. FIG. 23 is a plan view of the overlap structure between the lens holder and the housing in the camera module, according to an embodiment of the disclosure. FIG. 24 is a side view of the overlap structure between the lens holder and the housing in the camera module, according to an embodiment of the disclosure.

Referring to FIGS. 22 to 24, the camera module 480 may implement OIS by rotating the OIS carrier 471 configured to carry the reflector 450 using the OIS actuator 470 about a yaw axis (e.g., a Z axis) and/or a pitch axis (e.g., a Y axis). The driving of the OIS carrier 471 may be accomplished by electromagnetic coupling between at least one first OIS magnet 472 and at least one first OIS coil 473 and/or electromagnetic coupling between at least one second OIS magnet 474 and at least one second OIS coil 475. The force to drive the OIS carrier 471 may be related to the amount of magnetic flux between the respective OIS magnets 472 and 474 and their corresponding OIS coils 473 and 475. Therefore, increased size of the OIS magnets 472 and 474 and/or increased size of the OIS coils 473 and 475 may result in increased driving force.

The OIS coils 473 and 475 may be disposed on or adjacent to the side frames 410B of the housing 410. An area (e.g., a +/-Y directional area) of the side frame 410B oriented in a first direction (e.g., a +/-Y direction) may include a first mounting portion P11 on which the first OIS coil 473 is mounted. An area (e.g., a +X directional area) of the side frame 410B oriented in a second direction (e.g., a +X direction) may include a second mounting portion P21 on which the second OIS coil 475 is mounted. For example, the first mounting portion P11 and the second mounting portion P21 may include a hole or a recess of any suitable shape and size.

A height or thickness of the camera module 480 may be determined by the sum of the stacking lengths of the camera-related components in a stacking direction (e.g., a Z-axis direction). To increase the driving force of the OIS actuator 470 while substantially maintaining or reducing the height or thickness of the camera module 480, the lens holder 423 and the housing 410 may overlap each other in a predetermined view (e.g., a view seen from an XY plane).

The lens holder 423 may include a plurality of legs L. A pair of legs L among the plurality of legs L may be placed on a portion of an edge area of the side frame 410B oriented in one direction (e.g., a +Y direction). Another pair of legs L among the plurality of legs L may be placed on a portion of the edge area of the side frame 410B oriented in an opposite direction (e.g., a -Y direction). The legs L of each pair may be spaced apart from each other to form a recess R between the legs.

The area (e.g., the +/-Y directional area) of the side frame 410B oriented in the first direction (e.g., the +/-Y direction) may include a first peripheral portion P12 defined as a peripheral area of the first mounting portion P11. A portion of the first peripheral portion P12 may be a portion extending in a height direction or thickness direction of the camera module 480. This portion of the first peripheral portion P12 may at least be accommodated in the recess R. This portion of the first peripheral portion P12 may at least partially overlap an edge area (e.g., a +/-Y directional edge area) of the lens holder 423. This portion of the first peripheral portion P12 may not extend beyond the recess R in the height direction or thickness direction of the camera module 480. The size of the first mounting portion P11 may increase in the height direction or thickness direction of the camera module 480, allowing for the mounting of a larger first OIS coil 473.

The area (e.g., the +X directional area) of the side frame 410B oriented in the second direction (e.g., the +X direction) may include a second peripheral portion P22 defined as a peripheral area of the second mounting portion P21. A portion of the second peripheral portion P22 may be a portion extending in the height direction or thickness direction of the camera module 480. This portion of the second peripheral portion P22 may overlap substantially the entire edge area (e.g., a +X directional edge area) of the lens holder 423 when viewed from a plane (e.g., the XY plane) substantially orthogonal to the height direction or thickness direction of the camera module 480. This portion of the second peripheral portion P22 may not extend beyond the lens holder 423 in the height direction or thickness direction of the camera module 480. The size of the second mounting portion P21 may increase in the height direction or thickness direction of the camera module 480, allowing for the mounting of a larger second OIS coil 475.

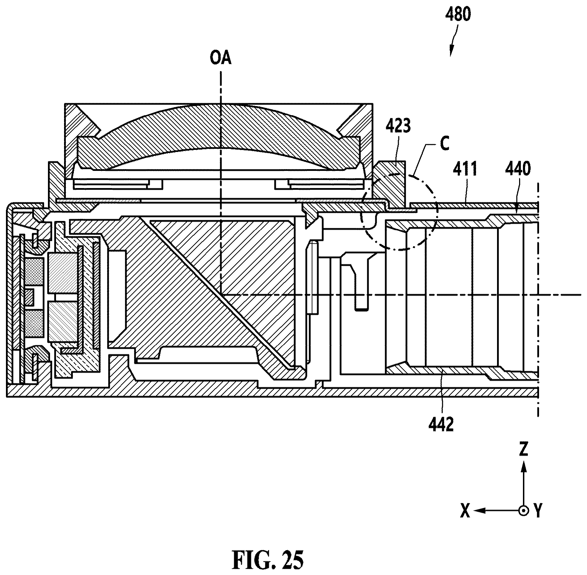

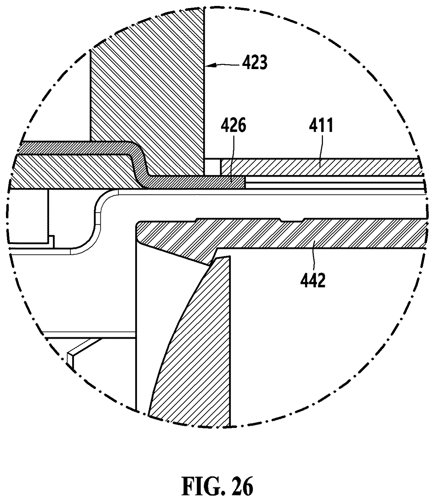

FIG. 25 is a diagram illustrating an overlap structure between the lens holder and a camera cover in the camera module, according to an embodiment of the disclosure. FIG. 26 is an enlarged view of a portion C of FIG. 25 according to an embodiment of the disclosure.

Referring to FIGS. 25 and 26, the second lens assembly 440 in the camera module 480 may move substantially parallel to a portion (e.g., an X-axis directional component) of the optical axis OA to adjust the focus of an image. The height or thickness (e.g., a Z-axis directional dimension) of the camera module 480 may be related to a thickness of the second lens housing 442, an operational clearance of the second lens housing 442, a thickness of the lens holder 423, and a thickness of the camera cover 411. To reduce or prevent a foreign substance from entering an inner space of the camera module 480, the lens holder 423 may have an overlap portion 426 configured to overlap a portion of the camera cover 411. The overlap portion 426 may be formed integrally with the lens holder 423. For example, the lens holder 423 and the overlap portion 426 may be formed by an insert injection scheme. The overlap portion 426 may be disposed between the camera cover 411 and the second lens housing 442. The overlap portion 426 may be in contact with the camera cover 411. The overlap portion 426 may be spaced apart from the second lens housing 442 by a gap. The overlap portion 426 may implement sealing of the inner space of the camera module 480 without a separate component (e.g., tape) or a precision sealing structure (e.g., bonding) that requires high production difficulty and reliability.

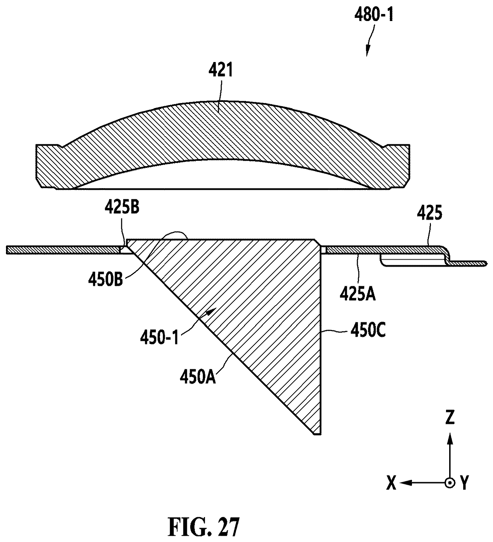

FIG. 27 is a diagram illustrating an arrangement relationship of a first lens, a reflector, and a concealing portion in a camera module, according to an embodiment of the disclosure.

Referring to FIG. 27, in a camera module 480-1 (e.g., the camera module 480 of FIGS. 5 to 26), the concealing portion 425 may be positioned closer to the reflective surface 450A of a reflector 450-1 (e.g., the reflector 450 of FIGS. 5 to 26) than to the first lens 421. For example, the base 425A may be substantially coplanar with the incident surface 450B or positioned below the incident surface 450B. The opening 425B may accommodate the reflector 450. The distance between the base 425A and the incident surface 450B may be determined within a range that does not substantially block an effective optical path (e.g., an area of the exit surface 450C excluding the second optical mask 452 in FIG. 11) of the exit surface 450C. In this embodiment, the reflector 450-1 may be fixed in place in the camera module 480-1. The reflector 450-1 may be configured not to rotate about a yaw axis (e.g., a Z-axis) and/or a pitch axis (e.g., a Y-axis).

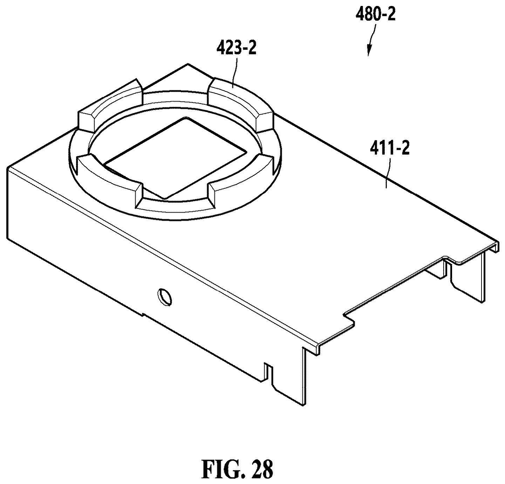

FIG. 28 is a diagram illustrating an integrated structure of a lens holder and a camera cover in a camera module, according to an embodiment of the disclosure.

Referring to FIG. 28, a camera module 480-2 (e.g., the camera module 480 of FIGS. 1 to 26 and/or the camera module 480-1 of FIG. 27) may include a camera cover 411-2 (e.g., the camera cover 411 of FIGS. 5 to 26) and a lens holder 423-2 (e.g., the lens holder 423 of FIGS. 5 to 26) that are formed integrally with each other. For example, the camera cover 411-2 and the lens holder 423-2 may be formed by an insert injection scheme.

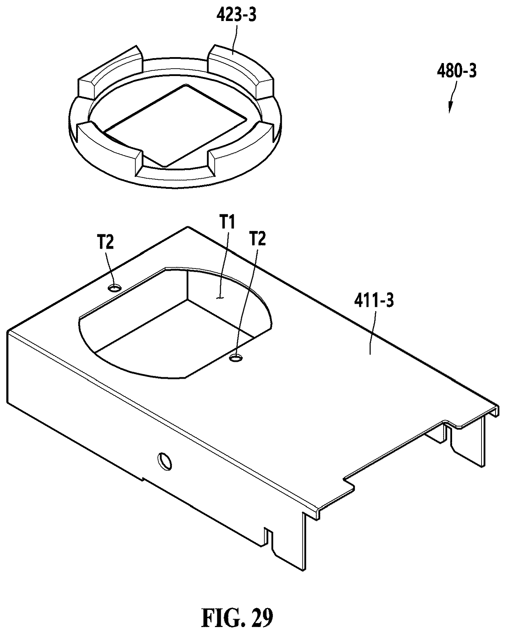

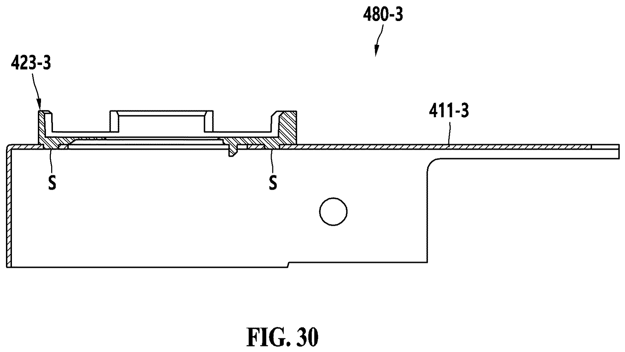

FIG. 29 is a diagram illustrating a structure of a lens holder to be assembled to a camera cover in a camera module, according to an embodiment of the disclosure. FIG. 30 is a diagram illustrating the structure of the lens holder assembled to the camera cover in the camera module, according to an embodiment of the disclosure.

Referring to FIGS. 29 and 30, a camera module 480-3 (e.g., the camera module 480 of FIGS. 1 to 26 and/or the camera module 480-1 of FIG. 27) may include a camera cover 411-3 (e.g., the camera cover 411 of FIGS. 1 to 26) and a lens holder 423-3 (e.g., the lens holder 423 of FIGS. 1 to 26) configured to be coupled (e.g., assembled) to the camera cover 411-3. The camera cover 411-3 may include an opening T1 substantially aligned with an opening of the lens holder 423-3. The camera cover 411-3 may include at least one hole T2 configured to engage with at least one boss S of the lens holder 423-3. At least one hole T2 may be disposed in a peripheral area of the opening T1. At least one hole T2 may be spaced apart from the opening T1. A coupling structure between the boss S and the hole T2 may reduce or prevent the movement (e.g., rotation) of the lens holder 423-3 relative to the camera cover 411-3.

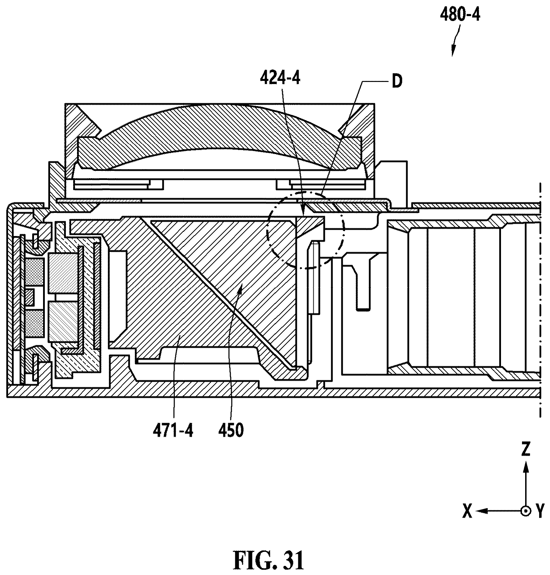

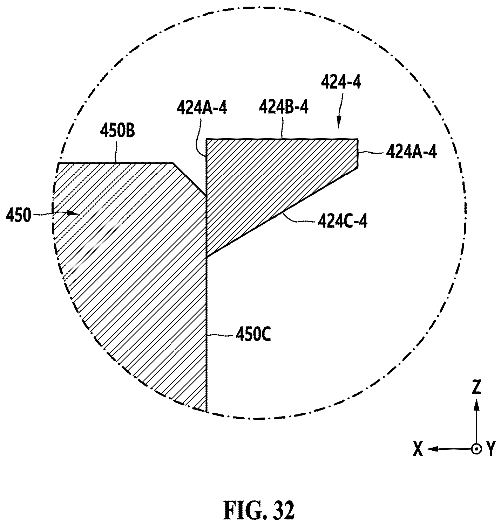

FIG. 31 is a diagram illustrating a blocking wall in a camera module, according to an embodiment of the disclosure. FIG. 32 is an enlarged view of a portion D of FIG. 31 according to an embodiment of the disclosure.

Referring to FIGS. 31 and 32, a camera module 480-4 (e.g., the camera module 480 of FIGS. 1 to 26, the camera module 480-1 of FIG. 27, the camera module 480-2 of FIG. 28, and/or the camera module 480-3 of FIG. 29) may include a blocking wall 424-4 (e.g., the blocking wall 424 of FIGS. 11 to 14) disposed on a carrier 471-4 (e.g., the carrier 471 of FIGS. 5 to 24) configured to support the reflector 450. The blocking wall 424-4 may be integrally and seamlessly connected to the carrier 471-4. In an embodiment not shown, the blocking wall 424-4 may be coupled to the carrier 471-4 as a separate component distinct from the carrier 471-4. The blocking wall 424-4 may extend substantially away from the reflector 450 (e.g., in a -X direction).

The blocking wall 424-4 may include a plurality (e.g., a pair) of first wall surfaces 424A-4 (e.g., the first wall surface 424A of FIGS. 11 to 14). One first wall surface 424A-4 of the plurality of first wall surfaces 424A-4 may be oriented in a direction (e.g., a +X direction) facing the reflector 450, and the other first wall surface 424A-4 may be oriented in a direction (e.g., a -X direction) away from the reflector 450. The plurality of first wall surfaces 424A-4 may be substantially parallel to the exit surface 450C. The first wall surface 424A-4 oriented in the direction (e.g., the +X direction) facing the reflector 450 may substantially be in contact with the exit surface 450C. The plurality of first wall surfaces 424A-4 may extend along the exit surface 450C. An extending length of the first wall surface 424A-4 oriented in the direction (e.g., the +X direction) facing the reflector 450 may be substantially equal to or greater than an extending length of the first wall surface 424A-4 oriented in the direction (e.g., the -X direction) away from the reflector 450.

The blocking wall 424-4 may include a second wall surface 424B-4 (e.g., the second wall surface 424B of FIGS. 11 to 14) connected to the plurality of first wall surfaces 424A-4. The second wall surface 424B-4 may be a portion of one surface (e.g., a +Z directional surface) of the carrier 471-4. The second wall surface 424B-4 may be substantially orthogonal to each of the plurality of first wall surfaces 424A. The second wall surface 424B-4 may be on a different plane from the plane on which the incident surface 450B is placed. In an embodiment not shown, the second wall surface 424B-4 may be substantially coplanar with the incident surface 450B.

The blocking wall 424-4 may include a third wall surface 424C-4 (e.g., the third wall surface 424C of FIGS. 11 to 14) inclined at a non-zero angle with respect to the plurality of first wall surfaces 424A-4. A distance between the second wall surface 424B-4 and the third wall surface 424C-4 may linearly decrease in a direction (e.g., the -X direction) toward the first wall surface 424A-4 which is oriented away from the reflector 450 (e.g., the -X direction). In an embodiment not shown, the distance may decrease nonlinearly.

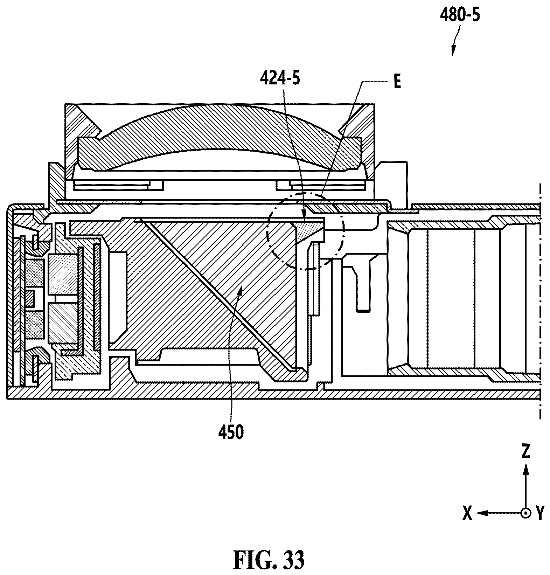

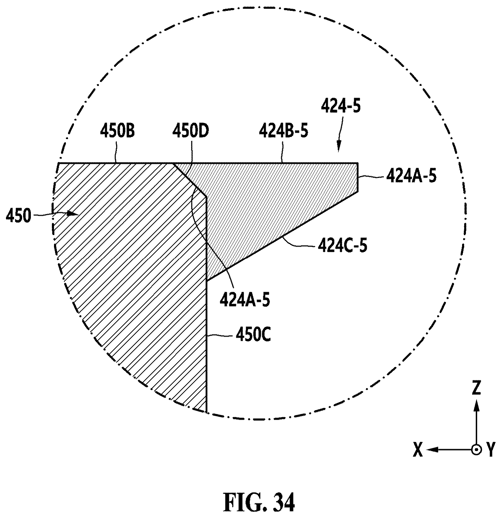

FIG. 33 is a diagram illustrating a blocking wall in a camera module, according to an embodiment of the disclosure. FIG. 34 is an enlarged view of a portion E of FIG. 33 according to an embodiment of the disclosure.

Referring to FIGS. 33 and 34, a camera module 480-5 (e.g., the camera module 480 of FIGS. 1 to 26, the camera module 480-1 of FIG. 27, the camera module 480-2 of FIG. 28, the camera module 480-3 of FIG. 29, and/or the camera module 480-4 of FIG. 31) may include a blocking wall 424-5 (e.g., the blocking wall 424 of FIGS. 11 to 14) disposed on the reflector 450. The blocking wall 424-5 may be coupled to the reflector 450 as a separate component distinct from the reflector 450. In an embodiment not shown, the blocking wall 424-5 may be integrally and seamlessly connected to the reflector 450. The blocking wall 424-5 may extend substantially away from the reflector 450 (e.g., a -X direction).

The blocking wall 424-5 may include a plurality (e.g., a pair) of first wall surfaces 424A-5 (e.g., the first wall surface 424A of FIGS. 11 to 14). One first wall surface 424A-5 of the plurality of first wall surfaces 424A-5 may be oriented in a direction (e.g., a +X direction) facing the reflector 450, and the other first wall surface 424A-5 may be oriented in a direction (e.g., a -X direction) away from the reflector 450.

The first wall surface 424A-5 oriented in the direction (e.g., the +X direction) facing the reflector 450 may not be parallel to the incident surface 450B and/or the exit surface 450C. The first wall surface 424A-5 oriented in the direction (e.g., the +X direction) facing the reflector 450 may be substantially parallel to a chamfered surface 450D. The first wall surface 424A-5 oriented in the direction (e.g., the +X direction) facing the reflector 450 may be in contact with the chamfered surface 450D. The first wall surface 424A-5 oriented in the direction (e.g., the +X direction) facing the reflector 450 may be substantially equal in length to the chamfered surface 450D.

The first wall surface 424A-5 oriented in the direction (e.g., the -X direction) away from the reflector 450 may be substantially parallel to the exit surface 450C. A length (e.g., a Z-axis directional dimension) of the first wall surface 424A-5 oriented in the direction (e.g., the -X direction) away from the reflector 450 may be substantially equal to or less than a distance from an edge of the third wall surface 424C-5 that is in contact with the exit surface 450C to the second wall surface 424B-5.

The blocking wall 424-5 may include a second wall surface 424B-5 (e.g., the second wall surface 424B of FIGS. 11 to 14) connected to a plurality of first wall surfaces 424A-5. The second wall surface 424B-5 may form a non-zero angle with respect to the first wall surface 424A-5 oriented in the direction (e.g., the +X direction) facing the reflector 450. The second wall surface 424B-5 may be substantially orthogonal to the first wall surface 424A-5 oriented in the direction (e.g., the -X direction) away from the reflector 450. The second wall surface 424B-5 may be substantially coplanar with the incident surface 450B.

The blocking wall 424-5 may include a third wall surface 424C-5 (e.g., the third wall surface 424C of FIGS. 11 to 14) inclined at a non-zero angle with respect to the plurality of first wall surfaces 424A-5. An angle between the first wall surface 424A-5 oriented in the direction (e.g., the +X direction) facing the reflector 450 and the third wall surface 424C-5 may be less than an angle between the first wall surface 424A-5 oriented in the direction (e.g., the -X direction) facing away from the reflector 450 and the third wall surface 424C-5.

One aspect of the disclosure may provide a camera module that suppresses flare that may appear in an image and an electronic device including the camera module.

One aspect of the disclosure may provide a camera module that reduces the number of internal camera components that may be visible to the outside through a lens and an electronic device including the camera module.

One aspect of the disclosure may provide a camera module having a maintained or reduced thickness and an electronic device including the camera module.

A camera module 480, 480-1, 480-2, 480-3, 480-4, or 480-5 may include a first lens 421 and a second lens 441. The camera module 480, 480-1, 480-2, 480-3, 480-4, or 480-5 may include a lens holder 423, 423-2, or 423-3 configured to support the first lens 421. The camera module 480, 480-1, 480-2, 480-3, 480-4, or 480-5 may include a reflector 450 or 450-1 disposed between the first lens 421 and the second lens 441 and configured to reflect, to the second lens 441, light passing through the first lens 421. The camera module 480, 480-1, 480-2, 480-3, 480-4, or 480-5 may include a blocking wall 424 configured to block an optical path between the reflector 450 or 450-1 and the lens holder 423, 423-2, or 423-3.

The blocking wall 424 may include a first wall surface 424A extending between the reflector 450 and the second lens 441.

The blocking wall 424 may include a second wall surface 424B that is substantially orthogonal to the first wall surface 424A and extends toward the second lens 441.

The blocking wall 424 may include a third wall surface 424C that is disposed opposite to the first wall surface 424A and has an orientation inclined with respect to the orientation of the first wall surface 424A.

The blocking wall 424 may be spaced apart from the reflector 450 toward the second lens 441.

A width of the blocking wall 424 may be less than a width of the reflector 450.

The lens holder 423 may include an opening 423D. The blocking wall 424 may be disposed at an edge area 423C or adjacent to the edge area 423C of the opening 423D.

The blocking wall 424 may be disposed on the lens holder 423, 423-2, or 423-3.

The camera module 480-4 may include a carrier 471-4 configured to support the reflector 450 or 450-1. The blocking wall 424-4 may be disposed on the carrier 471-4.

The blocking wall 424-5 may be disposed on the reflector 450 or 450-1.

The camera module 480, 480-1, 480-2, or 480-3 may include an actuator 470 configured to rotate the reflector 450 about a first axis substantially parallel to an optical axis OA of the first lens 421 and/or a second axis substantially orthogonal to the first axis.

The camera module 480, 480-1, 480-2, or 480-3 may include a concealing portion 425 configured to conceal another component except the reflector 450.

The concealing portion 425 may include a base 425A and an opening 425B defined in the base 425A such that an optical path between the first lens 421 and the reflector 450 is not blocked.

The base 425A may be disposed between the first lens 421 and the reflector 450.

The base 425A may be disposed on substantially the same plane as an incident surface 450B of the reflector 450 or below the incident surface 450B of the reflector 450 such that an effective optical path of an exit surface 450C of the reflector 450 is not blocked.

The base 425A may have a surface reflectivity of substantially equal to or less than about 2%.

The base 425A may have an uneven surface and/or a ridged surface.

The concealing portion 425 may be formed integrally with the lens holder 423.

The concealing portion 425 may include a material different from a material of the lens holder 423.

The camera module 480, 480-1, 480-2, or 480-3 may include an actuator 470 including a carrier 471 configured to carry the reflector 450, a first electromagnetic element 472 or 474 disposed on the carrier 471, and a second electromagnetic element 473 or 475 configured to be coupled to the first electromagnetic element 472. The camera module 480, 480-1, 480-2, or 480-3 may include a housing 410 including a mounting portion P11 or P21 on which the second electromagnetic element 473 or 475 is disposed and a peripheral portion P12 or P22 positioned around the mounting portion P11 or P21. The lens holder 423 may overlap at least a portion of the peripheral portion P12 or P22 on a plane substantially orthogonal to the optical axis OA of the first lens 421. At least a portion of the peripheral portion P12 or P22 overlapping the lens holder 423 may extend in a direction substantially parallel to a direction along the optical axis OA.

The camera module 480, 480-1, 480-2, or 480-3 may include a camera cover 411 configured to overlap at least a portion of the lens holder 423 and seal an interior of the camera module 480.

The camera module 480-2 may include a camera cover 411-2 formed integrally with the lens holder 423-2.

The camera module 480-3 may include a camera cover 411-3 configured to be coupled to the lens holder 423-3.

The camera module 480, 480-1, 480-2, or 480-3 may include the first lens 421 and a first lens housing 422 configured to accommodate the first lens 421. The camera module 480, 480-1, 480-2, or 480-3 may include the second lens 441 and a second lens housing 442 configured to accommodate the second lens 441. The camera module 480, 480-1, 480-2, or 480-3 may include the reflector 450 or 450-1 disposed between the first lens housing 422 and the second lens housing 442 and configured to reflect, to the second lens 441, light passing through the first lens 421. The camera module 480, 480-1, 480-2, or 480-3 may include the concealing portion 425 configured to conceal another component except the reflector 450.

The camera module 480, 480-1, 480-2, or 480-3 may include the first lens 421 and the first lens housing 422 configured to accommodate the first lens 421. The camera module 480, 480-1, 480-2, or 480-3 may include the lens holder 423 configured to hold the first lens housing 422. The camera module 480, 480-1, 480-2, or 480-3 may include the second lens 441 and the second lens housing 442 configured to accommodate the second lens 441. The camera module 480, 480-1, 480-2, or 480-3 may include the reflector 450 disposed between the first lens housing 422 and the second lens housing 442 and configured to reflect, to the second lens 441, light passing through the first lens 421. The camera module 480, 480-1, 480-2, or 480-3 may include the actuator 470. The actuator 470 may include the carrier 471 configured to carry the reflector 450, the first electromagnetic element 472 or 474 disposed on the carrier 471, and the second electromagnetic element 473 or 475 configured to be coupled to the first electromagnetic element 472. The camera module 480, 480-1, 480-2, or 480-3 may include a housing 410 including the mounting portion P11 or P21 on which the second electromagnetic element 473 or 475 is disposed and the peripheral portion P12 or P22 positioned around the mounting portion P11 or P21. The lens holder 423 may overlap at least a portion of the peripheral portion P12 or P22 on a plane substantially orthogonal to the optical axis OA of the first lens 421. At least a portion of the peripheral portion P12 or P22 overlapping the lens holder 423 may extend in a direction substantially parallel to a direction along the optical axis OA.

According to an embodiment, an optical path incident obliquely through a lens is blocked, so flare of an image may be suppressed and the quality of the image may be improved.

According to an embodiment, the aesthetics of a camera module may be improved as the number of internal camera components that may be visible to the outside through the lens is reduced.

According to an embodiment, the size of a magnet and/or a coil may be increased, which may result in an increase in driving force.

According to an embodiment, the size of the camera module may be maintained or reduced.

The effects of the camera module and the electronic device including the same according to an embodiment may not be limited to the above-mentioned effects, and other unmentioned effects may be clearly understood from the following description by one of ordinary skill in the art.

The embodiments of the present disclosure are intended to be illustrative and not restrictive. Various modifications may be made to the detailed description of the disclosure including the accompanying scope of claims and equivalents. Any of the embodiment(s) described herein may be used in combination with the embodiment(s) described herein.

## Claims

1. A camera module (480; 480-1; 480-2; 480-3; 480-4; 480-5) comprising:
a first lens (421),
a second lens (441),
a lens holder (423; 423-2; 423-3) configured to support the first lens (421),
a reflector (450; 450-1) disposed between the first lens (421) and the second lens (441) and configured to reflect, to the second lens (441), light passing through the first lens (421), and
a blocking wall (424; 424-4; 424-5) configured to block an optical path between the reflector (450; 450-1) and the lens holder (423; 423-2; 423-3).

2. The camera module of claim 1, wherein the blocking wall (424) comprises a first wall surface (424A) extending between the reflector (450) and the second lens (441).

3. The camera module of claim 2, wherein the blocking wall (424) further comprises a second wall surface (424B) substantially orthogonal to the first wall surface (424A) and extending toward the second lens (441).

4. The camera module of claim 2 or 3, wherein the blocking wall (424) further comprises a third wall surface (424C) disposed opposite to the first wall surface (424A) and having an orientation inclined with respect to an orientation of the first wall surface (424A).

5. The camera module of any one of claims 1 to 4, wherein the blocking wall (424) is spaced apart from the reflector (450) toward the second lens (441).

6. The camera module of any one of claims 1 to 5, wherein a width of the blocking wall (424) is less than a width of the reflector (450).

7. The camera module of any one of claims 1 to 6, wherein the lens holder (423) comprises an opening (423D), and the blocking wall (424) is disposed at or adjacent to an edge area (423C) of the opening (423D).

8. The camera module of any one of claims 1 to 7, wherein the blocking wall (424) is disposed on the lens holder (423; 423-2; 423-3),
wherein the camera module (480-4) further comprises a carrier (471-4) configured to support the reflector (450; 450-1),
wherein the blocking wall (424-4) is disposed on the carrier (471-4), or
wherein the blocking wall (424-5) is disposed on the reflector (450; 450-1).

9. The camera module of any one of claims 1 to 8, further comprising an actuator (470) configured to rotate the reflector (450) about a first axis substantially parallel to an optical axis (OA) of the first lens (421) and/or a second axis substantially orthogonal to the first axis.

10. The camera module of any one of claims 1 to 9, further comprising a concealing portion (425) configured to conceal another component except the reflector (450), and
preferably, wherein the concealing portion (425) comprises:
a base (425A), and
an opening (425B) defined in the base (425A) such that an optical path between the first lens (421) and the reflector (450) is not blocked.

11. The camera module of claim 10, wherein the base (425A) is disposed between the first lens (421) and the reflector (450), and/or
wherein the base (425A) is disposed on substantially a same plane as an incident surface (450B) of the reflector (450) or below the incident surface (450B) of the reflector (450) such that an effective optical path of an exit surface (450C) of the reflector (450) is not blocked, and/or
wherein the base (425A) has a surface reflectivity of substantially equal to or less than about 2%, and/or
wherein the base (425A) has an uneven surface and/or a ridged surface.

12. The camera module of claim 10 or 11, wherein the concealing portion (425) is formed integrally with the lens holder (423), and/or
wherein the concealing portion (425) comprises a material different from a material of the lens holder (423).

13. The camera module of any one of claims 1 to 12, further comprising:
an actuator (470) comprising a carrier (471) configured to carry the reflector (450), a first electromagnetic element (472, 474) disposed on the carrier (471), and
a second electromagnetic element (473, 475) configured to be coupled to the first electromagnetic element (472), and
a housing (410) comprising a mounting portion (P11, P21) on which the second electromagnetic element (473, 475) is disposed and a peripheral portion (P12, P22) positioned around the mounting portion (P11, P21),
wherein the lens holder (423) overlaps at least a portion of the peripheral portion (P12, P22) on a plane substantially orthogonal to the optical axis (OA) of the first lens (421), and the at least a portion of the peripheral portion (P12, P22) overlapping the lens holder (423) extends in a direction substantially parallel to a direction along the optical axis (OA).

14. The camera module of any one of claims 1 to 13, further comprising:
a camera cover (411) configured to overlap at least a portion of the lens holder (423) and seal an interior of the camera module (480), and/or
a camera cover (411-2) integrally formed with the lens holder (423-2), and/or
a camera cover (411-3) configured to be coupled to the lens holder (423-3).

15. An electronic device (101; 301) comprising a camera module (380B, 380D; 480; 480-1; 480-2; 480-3; 480-4; 480-5) of any one of claims 1 to 14.
